# EUROPÄISCHE PATENTSCHRIFT

(11) **EP 2 729 431 B1**
(45) Veröffentlichungstag und Bekanntmachung des Hinweises auf die Patenterteilung: **10.02.2016**
(21) Anmeldenummer: 12732526.4
(22) Anmeldetag: 14.06.2012
(51) Int. Cl.: C04B 38/06, C04B 35/111, C04B 35/447, C04B 35/486, C04B 35/565, C04B 35/587, C04B 35/63, C04B 35/634, C04B 35/636, C04B 35/638, C04B 35/626, B29C 67/20

(54) **VERFAHREN ZUR HERSTELLUNG EINER PORÖSEN KERAMIK**
PROCESS FOR PRODUCING A POROUS CERAMIC
PROCÉDÉ DE FABRICATION D'UNE CÉRAMIQUE POREUSE

(30) Priorität: 07.07.2011 DE 102011106834
(43) Veröffentlichungstag der Anmeldung: 14.05.2014
(73) Patentinhaber: Karlsruher Institut für Technologie, 76131 Karlsruhe (DE)
(72) Erfinder: WILLENBACHER, Norbert, 67292 Kirchheimbolanden (DE); HOCHSTEIN, Bernhard, 76646 Bruchsal (DE); KOOS, Erin, 76137 Karlsruhe (DE); DITTMANN, Jens, 76227 Karlsruhe (DE)
(74) Vertreter: Müller-Boré & Partner Patentanwälte PartG mbB
(86) Internationale Anmeldenummer: PCT/EP2012/002517
(87) Internationale Veröffentlichungsnummer: WO 2013/004336

(56) Entgegenhaltungen:
- E. KOOS ET AL: "Capillary Forces in Suspension Rheology", SCIENCE, Bd. 331, Nr. 6019, 18. Februar 2011 (2011-02-18), Seiten 897-900, XP55037557, ISSN: 0036-8075, DOI: 10.1126/science.1199243
- AKARTUNA I ET AL: "Macroporous Ceramics from Particle-stabilized Emulsions", ADVANCED MATERIALS, WILEY VCH VERLAG, DE, Bd. 20, Nr. 24, 20. Oktober 2008 (2008-10-20), Seiten 4714-4718, XP002598181, ISSN: 0935-9648, DOI: 10.1002/ADMA.200801888

## Beschreibung

Die vorliegende Erfindung betrifft ein Verfahren zur Herstellung einer porösen Keramik.

Poröse Keramiken und poröse keramische Formkörper werden in der Technik und in der Medizin vielfältig eingesetzt. Beispielsweise werden sie als Filtermaterial bei der Abwasseraufbereitung, als Filtermaterial (z.B. für Dieselpartikelfilter) und als Katalysatorträger in der Abgasreinigung, als Katalysatorträger in chemischen Verfahren, als Elemente für Leichtbaukonstruktionen, Schalldämpfer, Metallschmelzenfiltration, sowie als keramische Knochenersatzmaterialien verwendet. Die Vorteile beim Einsatz dieser keramischen Materialien gegenüber anderen Materialien sind beispielsweise auf deren hohe spezifische Festigkeit, insbesondere auch im Hochtemperaturbereich, die gute Korrosionsbeständigkeit und die Biokompatibilität zurückzuführen.

Die Porosität der Keramiken und keramischen Formkörper kann eine geschlossene oder eine offene Porosität sein, wobei die offene Porosität durch Poren gekennzeichnet ist, die untereinander und mit der Umgebung in Verbindung stehen, und die geschlossene Porosität durch nicht miteinander verbundene Poren gekennzeichnet ist. Die offene Porosität wird dabei ferner in eine durchgängige und eine nicht durchgängige offene Porosität unterteilt. Keramiken mit überwiegend geschlossener Porosität werden als Schäume bezeichnet. Die Poren werden bezüglich ihrer Größe in Nanoporen (kleiner als 2 nm), Mikroporen (zwischen 2 und 50 nm) und Makroporen (größer als 50 nm) eingeteilt.

Zur Herstellung von porösen Keramiken und keramischen Formkörpern sind im Stand der Technik verschiedenartige Verfahren bekannt, wie z.B. die Replikatechnik, das Platzhalterverfahren und das Schlickerschäumen.

Bei der Replikatechnik wird ein Schwamm in einen Keramikschlicker getaucht und damit beladen. Der mit dem Keramikschlicker beladene Schwamm wird getrocknet, zur Entfernung der Schwammstruktur thermisch behandelt (Pyrolyse) und anschließend wird die zurückgebliebene Keramikstruktur gesintert. Ein mit diesem Verfahren einhergehender Nachteil besteht darin, dass die Keramikstruktur während der Pyrolyse des Schwamms deformiert oder sogar zerstört werden kann, so dass die Festigkeit der fertigen Keramik beeinträchtigt wird. Ferner ist die Herstellung eines geeigneten Schwamms aufwändig und damit teuer und für Porengrößen von weniger als 10 µm nicht geeignet. Schließlich besteht bei diesem Verfahren das weitere Problem, dass toxische Gase, die durch die Pyrolyse entstehen, umweltschädlich sind.

Zur Erzeugung poröser Keramiken gemäß dem Platzhalterverfahren werden dem keramischen Ausgangsmaterial Platzhaltersubstanzen zugemischt, die mittels Pyrolyse wieder entfernt werden, was zur Porenbildung führt. Wenn jedoch mit dem Platzhalterverfahren Porengrößen von weniger als 10 µm erzeugt werden sollen, müssen die Platzhaltersubstanz und das keramische Ausgangsmaterial aufwändig aufbereitet werden und die Erzeugung einer weitgehend offenen und durchgängigen Porosität in Verbindung mit einer geringen Porengröße von weniger als 10 µm ist problematisch. Insbesondere müssen zusätzlich zur Herstellung dafür geeigneter Platzhaltersubstanzteilchen diese im keramischen Ausgangsmaterial neben dem zu sinternden Oxid homogen dispergiert werden und dürfen nicht als Agglomerat vorliegen. Ferner besteht auch bei dem Platzhalterverfahren ein Problem hinsichtlich entstehender toxischer Gase, die abgeführt und unschädlich gemacht werden müssen.

Beim Schlickerschäumen werden aktiv (mittels Gaseintrag) oder passiv (z.B. über eine chemische Reaktion) Gasblasen in den Keramikschlicker eingebracht, wodurch nach dem anschließenden Sintern ein poröser Keramikgrundkörper entsteht. Ein Problem beim Schlickerschäumen ist insbesondere die mangelnde Stabilität der gebildeten Gasblasen, die durch eine Blasenkoagulation zur Bildung größerer Gasblasen und damit größerer Poren führt. Deshalb ist auch bei diesem Verfahren die Erzeugung einer hohen offenen Porosität mit Porengrößen von weniger als 10 µm nur schwer zu realisieren.

Koos et al., Science 331, 897-900 (2011) zusammen mit dem Supporting Online Material offenbaren den Einsatz von Kapillarsuspensionen. Mithin findet sich aber darin keinerlei Ansatz, als Primärphase geschmolzene Wachse einzusetzen. Akartuna et al., Advanced Materials, Bd. 20, Nr. 24, 4714-4718 (2008)) offenbart auf Basis einer Pickering-Emulsion hergestellte Keramiken, wobei in einer Pickering-Emulsion die Partikelgröße um Größenordnungen kleiner als die Tropfengröße der dispersen flüssigen Phase ist, mit der Folge, dass in einer gesinterten Pickering Emulsion die Poren um Größenordnungen größer als die verwendeten Feststoffpartikel und zudem sphärisch sind.

Im Hinblick auf den vorstehend erläuterten Stand der Technik liegt der vorliegenden Erfindung daher die Aufgabe zugrunde, ein Verfahren bereitzustellen, das die Herstellung einer porösen Keramik mit definierter Porosität, Porenart und -größe ohne die Verwendung eines Schwamms, von Platzhaltersubstanzen oder von ähnlichen Materialien oder von Gasblasen mit schwer einstellbarer Blasengröße ermöglicht.

Die vorstehend genannte erste Aufgabe wird erfindungsgemäß durch ein Verfahren zur Herstellung einer porösen Keramik gelöst, das die folgenden Schritte umfasst:
Dispergieren von 2 bis 40 Volumenprozent eines teilchenförmigen Feststoffs, ausgewählt aus Oxiden, Carbiden, Nitriden und Phosphaten, in 50 bis 97,99 Volumenprozent einer flüssigen Primärphase und dann Zumischen von 0,01 bis 10 Volumenprozent einer flüssigen Sekundärphase zu der erhaltenen Suspension aus teilchenförmigem Feststoff und flüssiger Primärphase, jeweils bezogen auf das Gesamtvolumen der Suspension, wobei die Primärphase und die Sekundärphase nicht miteinander mischbar sind, unter Bildung einer Kapillarsuspension, welche ein Dreiphasensystem fest - flüssig - flüssig ist, wobei die flüssigen Phasen nicht miteinander mischbar sind, wobei jeweils eine Flüssigkeit die Primärphase und die andere Flüssigkeit die Sekundärphase bildet und entweder die Primär- oder die Sekundärphase gegenüber dem Feststoff besser benetzend ist, so daß sich eine hochelastische, gelartige Substanz bildet, wobei das durch Kapillarkräfte zusammengehaltene Partikelnetzwerk stabil bleibt und keine Sedimentation auftritt,
Entfernen der Primärphase und der Sekundärphase von der Suspension, wobei ein Festkörper erhalten wird, und
Sintern des nach dem Entfernen erhaltenen Festkörpers, wobei eine poröse Keramik gebildet wird, wobei als Primärphase eine unpolare Flüssigkeit und als Sekundärphase eine polare Flüssigkeit verwendet wird und die unpolare Flüssigkeit aus geschmolzenen Wachsen ausgewählt ist, wobei Paraffinwachse, Carnaubawachse, Montanwachse, Polyethylenwachse, Polypropylenwachse oder Polyamidwachse eingesetzt werden.

Das beanspruchte Verfahren zur Herstellung makroporöser Keramiken beruht auf der Nutzung sogenannter kapillarer Suspensionen, so dass ein Einbeziehen von Fremdphasen, wie dies bei den vorstehend erläuterten herkömmlichen Verfahren erforderlich ist, unnötig ist. Unter einer kapillaren Suspension wird dabei das Dreiphasensystem fest-flüssig-flüssig verstanden. Die flüssigen Phasen sind aufgrund unterschiedlicher Polarität nicht miteinander mischbar, wobei jeweils eine Flüssigkeit die Primärphase und die andere Flüssigkeit die Sekundärphase bildet. Als flüssige Phasen sind im Zusammenhang mit der vorliegenden Erfindung auch Materialien zu verstehen, die im schmelzflüssigen Zustand vorliegen, wie z.B. schmelzflüssige Polymere und Wachse. Bezüglich des Benetzungsverhaltens der flüssigen Phasen zum Feststoff der kapillaren Suspension werden die zwei Fälle eines Dreiphasengrenzwinkels θ > 90° (Fall 1) und θ < 90° (Fall 2) unterschieden. Hierbei ist entweder die Primär- oder die Sekundärphase gegenüber dem Feststoff besser benetzend. Wenn der in Teilchenform vorliegende Feststoff in der Primärphase homogen dispergiert ist und die Sekundärphase zugesetzt wird, bildet sich jeweils ein Teilchennetzwerk aus, das sich homogen durch die gesamte Primärphase zieht und sich in einer Änderung der rheologischen Eigenschaften äußert. Insbesondere kann sich dabei je nach Anteil der Sekundärphase und der Art der verwendeten Primärphase und des teilchenförmigen Feststoffs eine hochelastische, gelartige Substanz bilden. Die Ausbildung des Teilchennetzwerks ist sowohl für den Fall 1 als auch für den Fall 2 darauf zurückzuführen, dass die Sekundärphase als "Verbindungsflüssigkeit" zwischen den Feststoffteilchen vorliegt.

Das durch Kapillarkräfte zusammengehaltene Partikelnetzwerk bleibt dabei weitgehend stabil, es tritt keine Sedimentation auf. Die erhaltene gelartige Substanz kann zu einem Formkörper geformt werden, der nach der Entfernung der Primär- und Sekundärphase gesintert werden kann.

Das Dispergieren des Feststoffs in der Primärphase und die Zugabe der Sekundärphase erfolgen mittels geeigneter Knet- oder Rührvorrichtungen je nach den verwendeten Ausgangsmaterialien bei Drehzahlen im Bereich von 10 bis 2000 U/min und in einem Temperaturbereich zwischen 10 °C und 200 °C.

Das Sintern des erhaltenen Festkörpers wird je nach der Art des teilchenförmigen Feststoffs üblicherweise im Temperaturbereich zwischen 900 °C bis 2400 °C für einen Zeitraum von 0,5 Stunden bis 4 Stunden durchgeführt. Die Abstimmung der Sinterverfahrensparameter auf das jeweils vorliegende Materialsystem liegt im handwerklichen Ermessen eines Fachmanns.

Gemäß einer bevorzugten Ausführungsform weist das vorliegende Verfahren zwischen den Schritten des Dispergierens und des Entfernens ferner den Schritt des Formens der Suspension zu einem Formkörper auf.

Gegebenenfalls kann zwischen dem Dispergieren und dem Entfernen vor dem eigentlichen Formgebungsschritt auch ein Auftragen der Kapillarsuspension auf einen entsprechenden Träger durchgeführt werden. So kann die Kapillarsuspension auch als Schicht auf einen ebenen oder vorgeformten Träger oder eine Gerüststruktur bzw. Precursorstruktur, wie z.B. eine Katalysatorgerüststruktur oder Filtergerüststruktur, aufgebracht und dann auf diesem bzw. dieser gesintert werden.

Dadurch, dass gemäß dem beanspruchten Verfahren zur Herstellung einer porösen Keramik zunächst ein hochelastischer und gelartiger Festkörper erhalten wird, kann aus dem Festkörper in einfacher Weise ein Formkörper hergestellt werden. Geeignete Verfahren zur Herstellung eines Formkörpers sind z.B. Extrusion, Spritzguss oder Rakeldruck, wobei dem Fachmann geläufige Verfahrensparameter eingesetzt werden, die auf den jeweils vorliegenden gelartigen Feststoff abgestimmt sind.

Gemäß einer bevorzugten Ausführungsform des vorliegenden Verfahrens sind die Oxide aus Al₂O₃, ZrO₂, CeO₂, TiO₂, MgO, ZnO, Fe₂O₃, Fe₃O₄, SiO₂, Aluminiumtitanat und Bariumtitanat ausgewählt, die Carbide sind aus SiC, BC, HfC, TaC und WC ausgewählt, die Nitride sind aus SiN, AlN und TiN ausgewählt und die Phosphate sind aus Tricalciumphosphat und Hydroxylapatit ausgewählt.

Bevorzugte Oxide sind Al₂O₃ und ZrO₂. Als Carbid wird bevorzugt SiC eingesetzt. Bevorzugtes Nitrid ist SiN und als Phosphate werden insbesondere Tricalciumphosphat und Hydroxylapatit eingesetzt.

Gemäß einer bevorzugten Ausführungsform des vorliegenden Verfahrens weist der teilchenförmige Feststoff eine mittlere Teilchengröße d₅₀ von 0,1 bis 100 µm, vorzugsweise von 1 bis 50 µm, insbesondere von 3 bis 10 µm auf. Die mittlere Teilchengröße des teilchenförmigen Feststoffs wird mittels Laserbeugung (in Anlehnung an DIN EN 725-5, ISO13320), Licht- und Elektronenmikroskopie bestimmt.

Gemäß der Erfindung wird als Primärphase eine unpolare Flüssigkeit und als Sekundärphase eine polare Flüssigkeit verwendet, wobei die unpolare Flüssigkeit aus geschmolzenen Wachsen ausgewählt ist, wobei Paraffinwachse, Carnaubawachse, Montanwachse, Polyethylenwachse, Polypropylenwachse oder Polyamidwachse eingesetzt werden.

Gemäß einer bevorzugten Ausführungsform des vorliegenden Verfahrens ist die polare Flüssigkeit aus der Gruppe, bestehend aus Wasser, wässrigen Polymerlösungen, wässrigen Polysaccharidlösungen und geschmolzenen polaren Polymeren, ausgewählt. Bevorzugt werden Wasser und entsprechende wässrige Lösungen, Polyethylenglykol (PEG), Polyvinylalkohol (PVA), Polyvinylpyrrolidon (PVP), Saccharose bzw. Glycerin eingesetzt, wobei Polyvinylpyrrolidon, Saccharose, Wasser und entsprechende wässrige Lösungen besonders bevorzugt sind.

Gemäß einer bevorzugten Ausführungsform des vorliegenden Verfahrens wird die Entfernung der Primärphase und der Sekundärphase durch Erwärmen und/oder Extraktion und/oder Zentrifugieren durchgeführt.

Das Erwärmen wird je nach der verwendeten Primär/Sekundärphase in einem Temperaturbereich zwischen 100 °C bis 800 °C für einen Zeitraum von 1 Stunde bis 24 Stunden bei Normaldruck und ohne spezielle Schutzatmosphäre durchgeführt. Die Abstimmung der Verfahrensparameter im Rahmen dieses Erwärmungsschritts auf das jeweils vorliegende Materialsystem liegt im handwerklichen Ermessen eines Fachmanns.

Die Extraktion wird als Lösemittelextraktion in einem Temperaturbereich von 10 °C bis 70 °C für einen Zeitraum von 1 Stunde bis 14 Stunden durchgeführt.

Im Rahmen der vorliegenden Erfindung wird ferner eine poröse Keramik bereitgestellt, die mit dem vorstehend beschriebenen Verfahren erhältlich ist. Eine demgemäße poröse Keramik weist eine Porosität von 10 bis 80 %, vorzugsweise von 30 bis 60 %, und eine mittlere Porengröße d₅₀ von 0,1 bis 100 µm, vorzugsweise von 0,5 bis 10 µm, insbesondere von 1 bis 5 µm auf. Die Porosität und die mittlere Porengröße werden mittels Quecksilberporosimetrie (in Anlehnung an DIN66133), Archimedesdichte (in Anlehnung an DIN EN 993-18) und quantitativer Gefügeanalyse (in Anlehnung an DIN EN ISO 643) bestimmt. Die Porosität ist dabei als offene und durchgängige Porosität definiert.

Mit dem beanspruchten Verfahren zur Herstellung einer porösen Keramik kann in einfacher Weise eine hochporöse Struktur mit einer offenen und durchgängigen Porosität von 10 bis 80 % bzw. 10 bis 97 % bei einer mittleren Porengröße d₅₀ von 0,1 bis 100 µm bzw. d₅₀ von 0,5 bis 100 µm erzeugt werden, wobei die Porengrößenverteilung eng und weitgehend monomodal ist. Ferner kann durch eine gezielte Zugabe an Sekundärphase die Porengröße der porösen Keramik definiert eingestellt werden.

Aufgrund der Vielfalt der verwendbaren Materialien als teilchenförmiger Feststoff in Kombination mit den erzielbaren Eigenschaften hinsichtlich der Porosität und der Porengröße ist das beanspruchte Verfahren universell einsetzbar und somit für die unterschiedlichsten industriellen Anwendungsbereiche interessant. Kleinere Porengrößen ermöglichen bei Filtersystemen beispielsweise eine gewünschte höherwertige Aufreinigung von Medien, wobei in der Kombination mit der offenen Porosität aufgrund eines geringeren Druckverlustes und eines erhöhten Durchsatzes eine höhere Rentabilität erzielt werden kann. Ferner können durch größere spezifische Oberflächen bei Katalysatoren die Umsätze gesteigert werden und der Durchfluss bei Gasdiffusionsschichten kann erhöht werden. Aufgrund der einfachen Herstellungsverfahren können gegebenenfalls bestehende Anlagen oder Anlagenteile genutzt werden.

Schließlich kann bei geeigneter Auswahl der in einer vergleichsweise großen Menge eingesetzten Primärphase durch entsprechende Recyclingverfahren eine weitgehend vollständige Rückgewinnung der Primärphase erreicht werden (z.B. durch Lösemittelextraktion der Primärphase und Rückgewinnung von Lösemittel und Primärphase in einem geschlossenen Kreislauf). Ferner kann die thermische Pyrolyse der Sekundärphase bei Normaldruck und ohne spezielle Schutzatmosphäre durchgeführt werden, wobei aufgrund des niedrigen Sekundärphasenanteils im Vergleich zu anderen Verfahren nur eine geringe Menge an toxischen Pyrolysegasen anfällt.

Die vorliegende Erfindung wird durch Beispiele weiter erläutert, die jedoch nicht beschränkend aufzufassen sind.
Fig. 1(A) zeigt das im Beispiel 1 verwendete Pyrolysetemperaturprofil.
Fig. 1 (B) zeigt das im Beispiel 1 verwendete Sintertemperaturprofil.
Fig. 2 zeigt das Porenvolumen und die mittlere Porengröße des im Beispiel 1 erhaltenen Sinterkörpers.
Fig. 3 zeigt eine rasterelektronenmikroskopische Aufnahme einer Bruchfläche des im Beispiel 1 erhaltenen Sinterkörpers.
Fig. 4 zeigt das Porenvolumen und die mittlere Porengröße des im Beispiel 2 erhaltenen Sinterkörpers.

### Beispiele

### Beispiel 1: Herstellung einer porösen Al₂O₃-Keramik (nicht Teil der Erfindung)

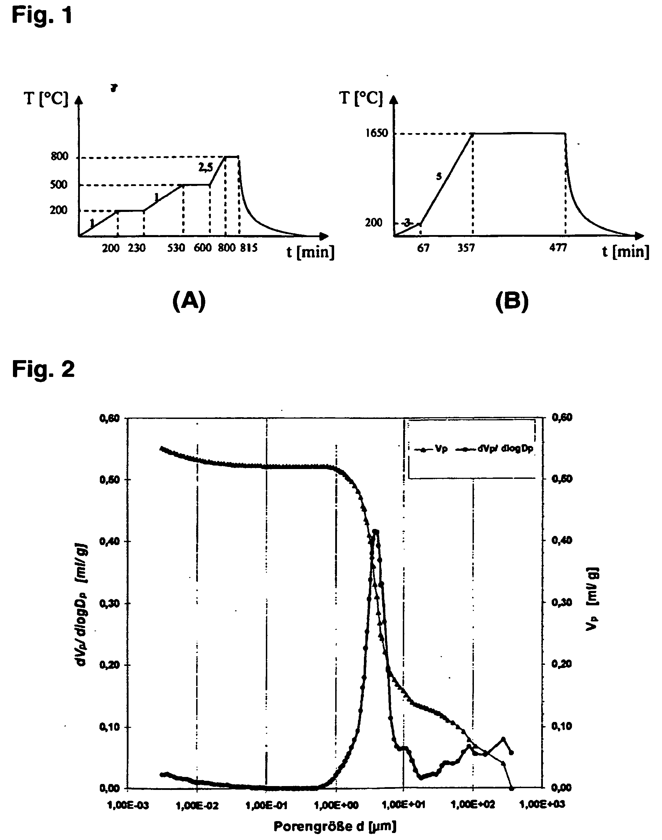

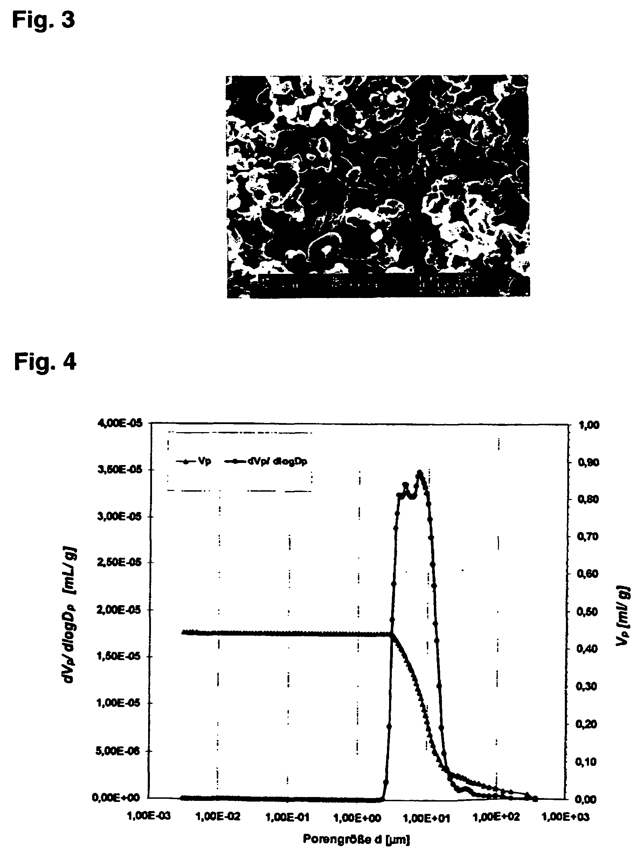

20,0 Volumenprozent eines α-Al₂O₃-Pulvers (CT19FG, von Almatis, Inc., Leetsdale, PA, USA, hergestellt) mit einer mittleren Teilchengröße dso von 5,5 µm als teilchenförmiger Feststoff und 78,8 Volumenprozent eines Silikonöls (AK 100, von Wacker Chemie AG, München, Deutschland, hergestellt) als flüssige Primärphase wurden vorgelegt und bei Raumtemperatur mit einem Flügelrührer bei 500 U/min gerührt, worauf unter Rühren 1,2 Volumenprozent Wasser als flüssige Sekundärphase zugesetzt wurden. Die erhaltene Suspension wurde dann zur Entfernung der Primärphase und der Sekundärphase gemäß dem in Fig. 1A dargestellten Pyrolysetemperaturprofil einer Pyrolyse unterzogen, worauf der erhaltene Feststoff gemäß dem in Fig. 1B dargestellten Sintertemperaturprofil gesintert wurde. Der Sinterkörper wies eine offene und durchgängige Porosität von 65,01 % bei einer mittleren Porengröße d₅₀ von 4,25 µm auf (vgl. die graphische Darstellung in der Fig. 2). Aus der Fig. 2 ist ferner ersichtlich, dass die Porengrößenverteilung im Wesentlichen monomodal ist. Ferner wurde die Bruchfläche des in diesem Beispiel erhaltenen Sinterkörpers rasterelektronenmikroskopisch untersucht, wobei die offene und durchgängige Porosität deutlich zu erkennen ist (vgl. Fig. 3).

### Beispiel 2: Herstellung eines porösen Al₂O₃-Keramikformkörpers

20 Volumenprozent eines α-Al₂O₃-Pulvers (CT19FG, von Almatis, Inc., Leetsdale, PA, USA, hergestellt) mit einer mittleren Teilchengröße d₅₀ von 5,5 µm als teilchenförmiger Feststoff und 78 Volumenprozent eines Paraffinwachses (H & R 50/52, von Hansen & Rosenthal, Hamburg, Deutschland, hergestellt) als Primärphase wurden vorgelegt und bei 75 °C mit einem Flügelrührer bei 500 U/min gerührt, worauf 2 Volumenprozent einer wässrigen Polysaccharidlösung (1,853 molar) als Sekundärphase unter den gleichen Bedingungen zugemischt wurden. Aus der erhaltenen Suspension wurden mittels Extrusion Formkörper hergestellt, die bei Raumtemperatur gut handhabbar waren. Die Primärphase wurde anschließend mittels Lösemittelextraktion mit n-Hexan während 12 Stunden bei Raumtemperatur entfernt, worauf der erhaltene Formkörper 3 Stunden bei 100 °C unter Vakuum getrocknet wurde. Dann wurde das Polysaccharid der Sekundärphase gemäß dem in Fig. 1A dargestellten Pyrolysetemperaturprofil einer Pyrolyse unterzogen, worauf der erhaltene Formkörper gemäß dem in Fig. 1B dargestellten Sintertemperaturprofil gesintert wurde. Der Sinterformkörper wies eine offene und durchgängige Porosität von 50,39 % bei einer mittleren Porengröße d₅₀ von 9,42 µm auf (vgl. die graphische Darstellung in der Fig. 4). Aus der Fig. 4 ist ferner ersichtlich, dass die Porengrößenverteilung im Wesentlichen monomodal ist.

## Patentansprüche

1. Verfahren zur Herstellung einer porösen Keramik, umfassend die Schritte:
Dispergieren von 2 bis 40 Volumenprozent eines teilchenförmigen Feststoffs, ausgewählt aus Oxiden, Carbiden, Nitriden und Phosphaten, in 50 bis 97,99 Volumenprozent einer flüssigen Primärphase und dann Zumischen von 0,01 bis 10 Volumenprozent einer flüssigen Sekundärphase zu der erhaltenen Suspension aus teilchenförmigem Feststoff und flüssiger Primärphase, jeweils bezogen auf das Gesamtvolumen der Suspension, wobei die Primärphase und die Sekundärphase nicht miteinander mischbar sind, unter Bildung einer Kapillarsuspension, welche ein Dreiphasensystem fest - flüssig - flüssig ist, wobei die flüssigen Phasen nicht miteinander mischbar sind, wobei jeweils eine Flüssigkeit die Primärphase und die andere Flüssigkeit die Sekundärphase bildet und entweder die Primär- oder die Sekundärphase gegenüber dem Feststoff besser benetzend ist, so daß sich eine hochelastische, gelartige Substanz bildet, wobei das durch Kapillarkräfte zusammengehaltene Partikelnetzwerk stabil bleibt und keine Sedimentation auftritt,
Entfernen der Primärphase und der Sekundärphase von der Suspension, wobei ein Festkörper erhalten wird, und
Sintern des nach dem Entfernen erhaltenen Festkörpers, wobei eine poröse Keramik gebildet wird,
wobei als Primärphase eine unpolare Flüssigkeit und als Sekundärphase eine polare Flüssigkeit verwendet wird und die unpolare Flüssigkeit aus geschmolzenen Wachsen ausgewählt ist, wobei Paraffinwachse, Carnaubawachse, Montanwachse, Polyethylenwachse, Polypropylenwachse oder Polyamidwachse eingesetzt werden.

2. Verfahren nach Anspruch 1, das zwischen den Schritten des Dispergierens und des Entfernens ferner den Schritt des Formens der Suspension zu einem Formkörper aufweist.

3. Verfahren nach Anspruch 1 oder 2, worin zwischen dem Dispergieren und dem Entfernen ein Auftragen der Kapillarsuspension auf einen Träger durchgeführt wird.

4. Verfahren nach einem der Ansprüche 1 bis 3, wobei die Oxide aus Al₂O₃, ZrO₂, CeO₂, TiO₂, MgO, ZnO, Fe₂O₃, Fe₃O₄, SiO₂, Aluminiumtitanat und Bariumtitanat ausgewählt sind, die Carbide aus SiC, BC, HfC, TaC und WC ausgewählt sind, die Nitride aus SiN, AlN und TiN ausgewählt sind, und die Phosphate aus Tricalciumphosphat und Hydroxylapatit ausgewählt sind.

5. Verfahren nach einem der Ansprüche 1 bis 4, wobei der teilchenförmige Feststoff eine mittlere Teilchengröße d₅₀ von 0,1 bis 100 µm aufweist.

6. Verfahren nach einem der Ansprüche 1 bis 5, wobei die polare Flüssigkeit aus der Gruppe, bestehend aus Wasser, wässrigen Polymerlösungen, wässrigen Polysaccharidlösungen und geschmolzenen polaren Polymeren, ausgewählt ist.

7. Verfahren nach einem der Ansprüche 1 bis 6, wobei die Entfernung der Primärphase und der Sekundärphase durch Erwärmen und/oder Extraktion durchgeführt wird.

## Claims

1. A method for the production of a porous ceramic, comprising the following steps:
dispersing of 2 to 40 volume percent of a particulate solid selected from oxides, carbides, nitrides and phosphates, in 50 to 97.99 volume percent of a liquid primary phase, and then adding 0.01 to 10 volume percent of a liquid secondary phase to the obtained suspension of the particulate solid and the liquid primary phase, in each case related to the total volume of the suspension, with the primary phase and the secondary phase not being miscible with each other, forming a capillary suspension being a three-phase-system solid-liquid-liquid, with the liquid phases not being miscible with each other, with one liquid forming the primary phase and the other liquid forming the secondary phase, respectively, and either the primary or the secondary phase being better wetting in comparison with the solid, so that a highly elastic, gel-like substance is formed, with the particle network held together by capillary forces remaining stable and no sedimentation occurring,
removing the primary phase and secondary phase from the suspension thus obtaining a solid, and
sintering the solid obtained after removal, with a porous ceramic being formed,
wherein a non-polar liquid is used as primary phase and a polar liquid is used as secondary phase and the non-polar liquid is selected from molten waxes, with paraffin waxes, carnauba waxes, montan waxes, polyethylene waxes, polypropylene waxes or polyamide waxes being used.

2. The method according to claim 1, further including the step of forming the suspension into a body between the steps of dispersing and removing.

3. The method according to claim 1 or 2, wherein applying the capillary suspension on a carrier is carried out between dispersing and removing.

4. The method according to one of the claims 1 to 3, wherein the oxides are selected from Al₂O₃, ZrO₂, CeO₂, TiO₂, MgO, ZnO, Fe₂O₃, Fe₃O₄, SiO₂, aluminum titanate and barium titanate, the carbides are selected from SiC, BC, HfC, TaC and WC, the nitrides are selected from SiN, AlN and TiN, and the phosphates are selected from tricalcium phosphate and hydroxylapatite.

5. The method according to one of the claims 1 to 4, with the particulate solid having a medium particle size d50 of 0.1 to 100 µm.

6. The method according to one of the claims 1 to 5, with the polar liquid being selected from the group consisting of water, aqueous polymer solutions, aqueous polysaccharide solutions and molten polar polymers.

7. The method according to one of the claims 1 to 6, with the removal of the primary phase and the secondary phase by means of heating and/or extraction.

## Revendications

1. Procédé servant à fabriquer une céramique poreuse, comprenant les étapes suivantes consistant à :
disperser 2 à 40 % en volume d'une matière solide se présentant sous la forme de particules, choisie parmi des oxydes, des carbures, des nitrures et des phosphates, dans 50 à 97,99 % en volume d'une phase primaire liquide, puis mélanger de 0,01 à 10 % en volume d'une phase secondaire liquide à la suspension obtenue composée d'une matière solide se présentant sous la forme de particules et d'une phase primaire liquide, respectivement par rapport au volume total de la suspension, sachant que la phase primaire et la phase secondaire ne peuvent être mélangées l'une à l'autre, en formant une suspension capillaire, qui est un système à trois phases solide-liquide-liquide, sachant que les phases liquides ne peuvent être mélangées les unes aux autres, sachant que respectivement un liquide forme la phase primaire et que l'autre liquide forme la phase secondaire et que ni la phase primaire ni la phase secondaire ne présentent une meilleure action d'imprégnation par rapport à la matière solide de sorte qu'il se forme une substance sous forme de gel, hautement élastique, sachant que le réseau de particules maintenu par des forces capillaires reste stable et qu'aucune sédimentation n'a lieu ;
éliminer la phase primaire et la phase secondaire de la suspension, sachant qu'un corps solide est obtenu ; et
fritter le corps solide obtenu après l'élimination, sachant qu'une céramique poreuse est formée,
sachant qu'un liquide non polaire est utilisé en tant que phase primaire et qu'un liquide polaire est utilisé en tant que phase secondaire et que le liquide non polaire est choisi parmi des cires fondues, sachant que la cire de paraffine, la cire de carnauba, la cire de lignite, la cire de polyéthylène, la cire de polypropylène ou la cire de polyamide sont employées.

2. Procédé selon la revendication 1, qui présente, entre les étapes de dispersion et d'élimination, en outre l'étape de la mise en forme de la suspension en un corps moulé.

3. Procédé selon la revendication 1 ou 2, dans lequel une application de la suspension capillaire sur un support est effectuée entre la dispersion et l'élimination.

4. Procédé selon l'une quelconque des revendications 1 à 3, sachant que les oxydes sont choisis parmi Al₂O₃, ZrO₂, CeO₂, TiO₂, MgO, ZnO, Fe₂O₃, Fe₃O₄, SiO₂, titanate d'aluminium et titanate de baryum, que les carbures sont choisis parmi SiC, BC, HfC, TaC et WC, que les nitrures sont choisis parmi SiN, AIN et TiN, et que les phosphates sont choisis parmi le phosphate tricalcique et l'hydroxyapatite.

5. Procédé selon l'une quelconque des revendications 1 à 4, sachant que la matière solide se présentant sous la forme de particules présente une taille de particules moyenne dso allant de 0,1 à 100 µm.

6. Procédé selon l'une quelconque des revendications 1 à 5, sachant que le liquide polaire est choisi parmi le groupe comprenant l'eau, les solutions aqueuses de polymères, les solutions aqueuses de polysaccharide et les polymères polaires fondus.

7. Procédé selon l'une quelconque des revendications 1 à 6, sachant que l'élimination de la phase primaire et l'élimination de la phase secondaire sont effectuées par réchauffage et/ou extraction.
